# EUROPÄISCHE PATENTSCHRIFT

(11) **EP 1 292 182 B1**
(45) Veröffentlichungstag und Bekanntmachung des Hinweises auf die Patenterteilung: **27.09.2006**
(21) Anmeldenummer: 01915267.7
(22) Anmeldetag: 16.02.2001
(51) Int. Cl.: A01J 5/007, A01J 5/017

(54) **VERFAHREN ZUR BESTIMMUNG EINES AKTIVIERUNGSSIGNALS, INSBESONDERE EINES AKTIVIERUNGSSIGNALS ZUM EINLEITEN EINER AN EINE HAUPTMELKPHASE SICH ANSCHLIESSENDEN NACHMELKPHASE**
METHOD FOR DETERMINING AN ACTIVATION SIGNAL, ESPECIALLY AN ACTIVATION SIGNAL FOR INITIATING A SUBSEQUENT MILKING PHASE FOLLOWING A PRIMARY MILKING PHASE
PROCEDE POUR DETERMINER UN SIGNAL D'ACTIVATION, NOTAMMENT UN SIGNAL D'ACTIVATION POUR INDUITE UNE PHASE DE POST-TRAITE FAISANT SUITE A UNE PHASE DE TRAITE PRINCIPALE

(30) Priorität: 25.05.2000 DE 10025866
(43) Veröffentlichungstag der Anmeldung: 19.03.2003
(73) Patentinhaber: WestfaliaSurge GmbH, 59199 Bönen (DE)
(72) Erfinder: OSTHUES, Uwe, 58708 Menden (DE); WAMHOF, Heiner, 49186 Bad Iburg (DE)
(74) Vertreter: Neumann, Ditmar
(86) Internationale Anmeldenummer: PCT/EP2001/001726
(87) Internationale Veröffentlichungsnummer: WO 2001/089292

(56) Entgegenhaltungen:
- EP-A- 0 954 962
- EP-A- 0 962 131
- WO-A-95/31096
- WO-A-99/35904
- DE-A- 4 113 699

## Beschreibung

Der Gegenstand der Erfindung bezieht sich auf ein Verfahren zur Bestimmung eines Aktivierungssignals während eines Melkvorganges eines Tieres, insbesondere einer Kuh gemäß Anspruch 1.

In der jüngeren Vergangenheit ist ein großes Ausmaß der Technisierung im Bereich der Melktechnik festzustellen. Der Automatisierungsgrad nimmt stetig zu. Durch die EP 0 717 590 B1 ist beispielsweise eine Karussellmelkanlage bekannt Diese Anlage weist mehrere Melkplätze auf, die um ein Zentrum herum drehbar sind. Beim Betreten der Karussellmelkanlage nimmt ein Tier, insbesondere eine Kuh, einen Melkplatz ein. Melkzeuge werden an das Euter des Tieres angesetzt. Während des Melkvorganges dreht sich die Karussellmelkanlage bis zu einem Ausgang, durch den das Tier die Karussellmelkanlage verlassen kann. Während der Drehbewegung erfolgt der Melkvorgang sowie die Abnahme des Melkzeugs.

Durch die EP 0 300 115 A1 ist ein Verfahren zum Melken von Tieren und eine Melkanlage bekannt. Die Melkanlage weist mehrere stationär angeordnete Melkstände auf, in denen das Melkzeug automatisch an die Zitzen des Tieres angesetzt wird.

DE 41 13 699 beschreibt eine Melkmaschine womit tieropezifische Merkmale, wie die abgegebene Milchmenge und der Milchfluß, gemessen werden.

Die Prozeßabläufe in einer Melkanlage werden u.a. durch die Melkdauer des Tieres bestimmt.

Beim maschinellen Melken wird mit einem Vakuum von ca. 40 Kilopascal gearbeitet. Es ist festgestellt worden, daß beim Melken von Tieren mittels Melkmaschinen die Gefahr besteht, daß die Melkbecher des Melkzeugs zum Euter hin wandern und es somit zu einem Abschnüren an der Zitzenbasis im Bereich des fürstenberg'schen Venenrings kommen kann. Dieser Effekt tritt mit nachlassendem Milchfluß bzw. Euterdruck verstärkt auf.

Das Abschnüren an der Zitzenbasis im Bereich des furstenberg'schen Venenrings hat zur Folge, daß sich der Milchfluß verringert und sich die Melkzeit erhöht Eine solche Erhöhung der Melkzeit ist aus wirtschaftlichen Gründen unerwünscht. Daneben tritt eine Erhöhung der Menge des Nachgemelks auf Ist die Nachgemelksmenge deutlich größer als ca. 300 Gramm, kann dies die Eutergesundheit negativ beeinflussen. Den Betreibern von Milchviehanlagen können daher durch Eutererkrankungen hohe Verluste durch nicht verkehrsfähige Milch entstehen.

Die Problematik des Wanderns der Melkzeuge in Richtung des Euters eines Tieres ist bereits erkannt worden. Um ein Wandern des Melkzeugs zu unterbinden, ist der Versuch unternommen worden, das Vakuum am Melkzeug zu verringern. Diese Vorgehensweise führt zwar zu dem gewünschten Ergebnis, hat jedoch einige Nachteile. Es besteht die Gefahr, daß die Melkzeuge von den Zitzen abfallen, da kein ausreichender Halt durch das verminderte Vakuum gegeben ist. Diese Gefahr wird noch weiter verstärkt, wenn sich das zu melkende Tier bewegt und so die Melkzeuge abgeschlagen werden. Die Verringerung des Vakuums während einer Nachmelkphase konnte sich daher nicht durchsetzten.

Um das Wandern der Melkzeuge zu verhindern sind sogenannte Nachmelkautomaten für das Melken in Melkständen entwickelt worden. Sie sollen die Arbeit des Melkers technisch unterstützen und eine Standardisierung des Melkens in einer Nachmelkphase erreichen, in der der Milchfluß nachläßt. Durch den Prospekt "FINILACTOR Nachmelkautomatik"der Firma Westfalia Landtechnik GmbH ist ein solcher Nachmelkautomat bekannt.

Der Nachmelkautomat wird aktiviert, wenn ein fest vordefinierter Wert für den Milchfluß unterschritten wird. Dies erfolgt in der Regel bei einem Milchfluß von 550 bis 850 g/min. Wird dieser vordefinierte Milchfluß unterschritten, so erfolgt ein Aktivierungssignal, durch das die Nachmelkphase eingeleitet wird. Der Nachmelkautomat weist ein Melkzeug auf, das mit einem in alle Richtungen frei beweglichen Tragarm verbunden ist. Unterschreitet der Milchfluß einen fest vorgegebenen Wert, zu dem die Nachmelkphase beginnt, so wird der Tragarm vertikal nach unten bewegt. Hierdurch wird das Milchsammelstück nach unten gedrückt. Dieses zieht an dem Melkzeug, so daß sich das Melkzeug nicht in Richtung des Euters bewegen kann.

Hiervon ausgehend liegt der vorliegenden Erfindung die Aufgabe zugrunde, ein Verfahren zur Bestimmung eines Aktivierungssignals während eines Melkvorgangs anzugeben, durch welches eine effizientere Nutzung einer Melkanlage erreichbar ist. Insbesondere soll durch das erfindungsgemäße Verfahren erreicht werden, daß das Melken eines Tieres zu keiner Beeinträchtigung der Eutergesundheit führt.

Diese Zielsetzung wird erfindungsgemäß durch ein Verfahren mit den Merkmalen des Anspruchs 1. erreicht. Vorteilhafte Weiterbildungen und Ausgestaltungen des Verfahrens sind Gegenstand der Unteransprüche.

Dem erfindungsgemäßen Verfahren liegt die Grundidee zugrunde, daß das mindestens eine Aktivierungssignal während eines Melkvorganges eines Tieres, insbesondere einer Kuh, in Abhängigkeit von wenigstens einer tierindividuellen Kenngröße bestimmt wird. Das Aktivierungssignal bildet ein Signal, durch welches eine Aktivierung von Vorgängen und/oder Peripheriegeräten oder - einrichtungen eine Melkanlage erfolgt. Dadurch, daß das Aktivierungssignal tierindividuell bestimmt wird, kann eine sehr effiziente Nutzung einer Melkanlage erzielt werden. Vorzugsweise wird das Aktivierungssignal zur Ansteuerung der Geschwindigkeit einer Karussellmelkanlage genutzt, da bereits zu einem sehr frühen Zeitpunkt bekannt ist, daß der Melkvorgang innerhalb einer bestimmten Zeitspanne abgeschlossen wird. In Abhängigkeit von der Stellung der Karussellmelkanlage kann eine Erhöhung oder eine Verringerung der Verfahrgeschwindigkeit der Karussellmelkanlage erfolgen.

Das Aktivierungssignal kann auch dazu genutzt werden, Peripheriegeräte- oder einrichtungen anzusteuern, da in absehbarer Zeit der Vorgang des Melkens abgeschlossen sein wird. So kann beispielsweise das Aktivierungsignal dazu genutzt werden, eine Fütterungseinrichtung anzusteuern, die das Futter eines Tieres dann freigibt, wenn der Melkvorgang abgeschlossen ist. Das Aktivierungssignal kann dazu genutzt werden, bestimmte Sperrgatter freizugeben, durch die der Weg zum Melkstand für eine nachfolgendes Tier freigegeben wird. Durch das Aktivierungssignal besteht die Möglichkeit, das Melkzeug tierindividuell abzunehmen, da der Zeitpunkt variabel ist.

Um die Genauigkeit des Zeitpunktes, zu dem das Aktivierungssignal bestimmt wird, zu erhöhen, wird gemäß einer vorteilhaften Weiterbildung des Verfahrens vorgeschlagen, daß der Melkvorgang in wenigstens zwei aufeinander folgende Phasen unterteilt und das mindestens eine Aktivierungssignal während einer der wenigstens zwei Phasen bestimmt wird. Durch diese vorteilhafte Verfahrensführung wird auch eine Möglichkeit geschaffen, mehrere Aktivierungssignale zu generieren, die den einzelnen Phasen zugeordnet werden. Die Phasen können vorbestimmt sein. Die Dauer der einzelnen Phasen kann gleich oder unterschiedlich sein.

Zur Unterteilung des Melkvorganges kann auch der Verlauf des Milchflusses in Abhängigkeit von der Melkdauer herangezogen werden. Als besonders zweckmäßig hat sich herausgestellt, daß der Melkvorgang in eine Hauptmelkphase und eine Nachmelkphase unterteilt wird.

Die Unterteilung des Melkvorgangs in die wenigstens zwei Phasen ist tierindividuell vorgegeben, so daß eine noch bessere Annäherung an das Melkverhalten des Tieres erreicht wird.

Gemäß einer Ausgestaltung des Verfahrens wird vorgeschlagen, daß als eine Kenngröße zur Bestimmung des Aktivierungssignals die Änderung des Milchflusses während des Melkvorganges oder einer zum Milchfluß proportionalen Größe herangezogen wird.

Das Aktivierungssignal wird zur Einleitung der Nachmelkphase bei einem Tier genutzt. Die Einleitung der Nachmelkphase erfolgt für jedes Tier individuell.

Hierdurch werden die bekannten Nachteile bezüglich längerer Melkzeit, Nachgemelksmenge, negative Auswirkungen auf die Eutergesundheit und damit wirtschaftliche Schäden reduziert bzw. vermieden.

Bei einer solchen Verfahrensführung wird auch ausgenutzt, daß bei modernen Melkanlagen eine Tiererkennung stattfindet, so daß bekannt ist, welches Tier gemolken werden soll. Aus der Datenerfassung der Tiere ist deren gesamte Historie bezüglich Melkergiebigkeit, Krankheiten, Laktationsphase usw. bekannt, so daß diese Daten zur Bestimmung eines Aktivierungssignals herangezogen werden können.

Es wird noch vorgeschlagen, daß als Erkenngröße zur Bestimmung des Aktivierungssignals die Änderung des Milchflusses während der Hauptmelkphase oder einer zum Milchfluß proportionalen Größe herangezogen wird. Durch diese vorteilhafte Weiterbildung des Verfahrens wird erreicht, daß bei schwer zu melkenden Tieren, bei denen der Milchfluß gegenüber leicht zu melkenden Tieren wesentlich geringer ist, die Aktivierung der Nachmelkphase und Abnahmephase nicht zu früh erfolgt.

Die Bestimmung des Aktivierungssignals auf der Basis der Milchintensitätsdifferenz hat auch den Vorteil, daß auch die tierindividuelle Veränderung des Milchflusses, die während der Laktation schwankt, berücksichtigt wird.

Gemäß der Ausgestaltung des Verfahrens wird vorgeschlagen, daß das Aktivierungssignal in Abhängigkeit von einem Vergleich zwischen einer zeitlichen Änderung des Milchflusses während der Hauptmelkphase oder einer ihr proportionalen Größe (Ist-Milchfluß) und einem Soll-Milchfluß bestimmt wird. Der Soll-Milchfluß ist eine tierindividuelle Größe, die aupinisch ermittelt worden ist. Diese Soll-Milchfluß-Größe kann auch eine auf Erfahrungswerte basierende Größe sein, die vorgegeben wird. Ist dies der Fall, so wird gemäß einer vorteilhaften Ausgestaltung des Verfahrens vorgeschlagen, daß die zeitliche Änderung des Milchflusses oder einer zum Milchfluß proportionalen Größe wenigsten eines Melkvorgangs gespeichert und zur Bestimmung des Soll-Milchflusses eines darauffolgenden Melkvorgangs herangezogen wird.

Nach einer noch weiteren vorteilhaften Ausgestaltung des Verfahrens wird vorgeschlagen, daß die zeitliche Änderung des Milchflusses oder einer zum Milchfluß proportionalen Größe mehrere Melkvorgänge gespeichert und der Soll-Milchfluß für einen darauffolgenden Melkvorgang durch Interpolation oder Extrapolation aus den gespeicherten Daten ermittelt wird. Durch diese Verfahrensführung wird eine Verfeinerung der Bestimmung der Kenngröße erzielt werden. Die gespeicherten Kenngrößen können auch als Ausgangsdaten für die Annahme des Milchflusses anderer Tiere gleicher Rasse herangezogen werden. Durch geeignete Auswertungsmöglichkeiten wird dem Betreiber einer Milchviehanlage auch die Möglichkeit gegeben, den Milchfluß einzelner Tiere über eine längere Periode zu beobachten. Aus großen Schwankungen des Milchflusses des Tieres kann ggf. auf mögliche gesundheitliche Beeinträchtigungen des Tieres geschlossen werden.

Gemäß einer noch weiteren vorteilhaften Ausgestaltung des Verfahrens wird vorgeschlagen, daß das Aktivierungssignal in Abhängigkeit von einem Vergleich zwischen der während der Hauptmelkphase abgegebenen Ist-Milchmenge oder einer zur Milchmenge proportionalen Größe und einer vorgegebenen Soll-Milchmenge bestimmt wird. Die Nachmelkphase und die Abnahmephase wird vorzugsweise lediglich dann eingeleitet, wenn die ermolkene Milchmenge einen vordefinierten Anteil der zu erwartenden Milchmenge erreicht hat. Durch diese Maßnahme wird erreicht, daß bei leicht zu melkenden Tieren, die bereits die zu erwartende Milchmenge vollständig oder fast vollständig erreicht haben, kein Nachmelkvorgang eingeleitet wird.

Gemäß einer noch weiteren vorteilhaften Ausgestaltung des Verfahrens wird vorgeschlagen, daß die Gesamt-Milchmenge wenigsten eines Melkvorgangs bestimmt wird und der Wert dieser Gesamt-Milchmenge als ein Ausgangswert zur Bestimmung der Soll-Milchmenge wenigsten eines darauffolgenden Melkvorgangs dient.

Nach einer noch weiteren vorteilhaften Ausgestaltung des Verfahrens wird vorgeschlagen, daß der Soll-Milchfluß ohne die Soll-Milchmenge unter Berücksichtigung des Laktationsfaktors bestehen wird. Der Laktationsfaktor gibt im wesentlichen an, in welcher Laktationsphase sich das zu melkende Tier befindet.

Weitere Vorteile und Einzelheiten des Verfahrens werden anhand eines schematischen Diagramms, der den Milchfluß in Abhängigkeit von der Zeit darstellt, erläutert.

In dem Diagramm ist der Verlauf des Milchflusses in Abhängigkeit von der Zeit dargestellt. Zu Beginn der Hauptmelkphase steigt der Milchfluß sehr stark an. Er geht über in einen Plateaubereich. Mit A ist der maximale Milchfluß bezeichnet, der zu einem Zeitpunkt T_{A} auftritt. Mit steigender Dauer des Melkens nimmt der Milchfluß ab. Hat der Milchfluß einen vorgegebenen Wert Y unterschritten, so wird die Nachmelkphase (NM) eingeleitet. Dies geschieht in dem dargestellten Diagramm zum Zeitpunkt T_{Y}.

Der Wert Y für den Milchfluß, zu dem das Aktivierungssignal ausgelöst wird, kann beispielsweise dadurch bestimmt werden, daß Y=A-A·X, wobei 0<X<1 ist. Mit dem Faktor X wird eine tierindividuelle Kenngröße bezeichnet. Sie kann für verschiedene Tiere unterschiedlich sein.

Zur Bestimmung des Milchflusses wird dieser kontinuierlich oder diskontinuierlich gemessen. Vorzugsweise erfolgt die Messung des Milchflusses in vorgegebenen Zeitintervallen.

Die Einleitung der Nachmelkphase kann auch durch ein Aktivierungssignal eingeleitet werden, wobei das Aktivierungssignal durch die zeitliche Änderung des Milchflusses bestimmt wird. Das Aktivierungssignal wird dann ausgelöst, wenn ΔQ/Δt<X ist. Hierbei ist ΔQ die Differenz des Milchflusses innerhalb eines vorgegebenen Zeitintervalls Δt und X eine tierindividuelle Kenngröße.

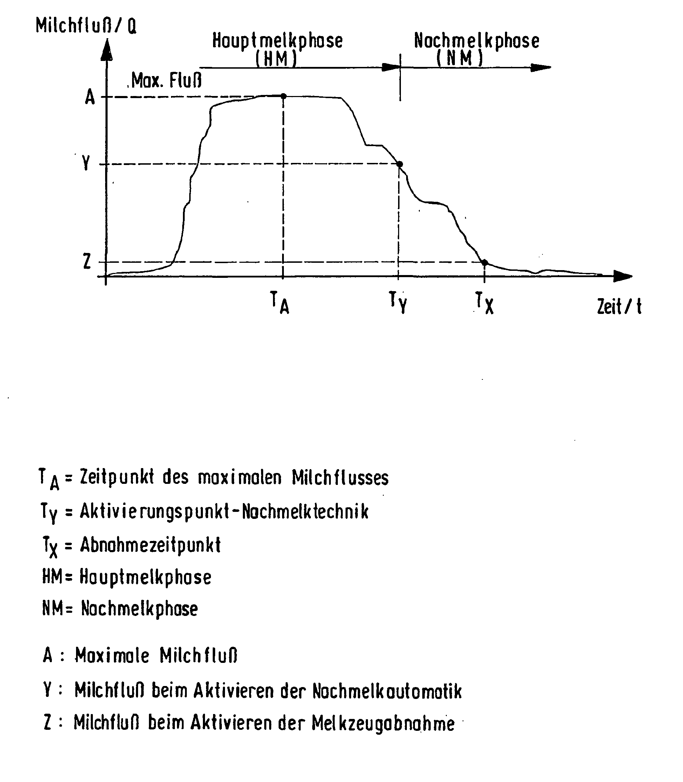

## Patentansprüche

1. Verfahren zur Bestimmung mindestens eines Aktivierungssignals, wobei das mindestens eine Aktivierungssignal während eines Melkvorgangs eines Tieres, welches mit einer Tiererkennung erkannt wird, insbesondere einer Kuh, in Abhängigkeit von wenigstens einer tierindividuellen Kenngröße bestimmt wird, wobei der Melkvorgang in mindestens zwei Phasen unterteilt wird und das Aktivierungssignal zur Einleitung einer Nachmelkphase genutzt und die Nachmelkphase für jedes Tierindividuell eingeleitet wird, wobei als eine Kenngröße zur Bestimmung des Aktivierungssignals die Änderung des Milchflusses während des Melkvorgangs oder einer zum Milchfluß proportionalen Größe herangezogen wird und das Aktivierungssignal in Abhängigkeit von einem Vergleich zwischen einer zeitlichen Änderung des Milchflusses während des Melkvorgangs, insbesondere während einer Phase, vorzugsweise während der Hauptmelkphase, oder einer zum Milchfluß proportionalen Größe (Ist-Milchfluß) und einem Soll-Milchfluß bestimmt wird.

2. Verfahren nach Anspruch 1, bei dem der Melkvorgang in eine Hauptmelkphase (HM) und eine Nachmelkphase (NM) unterteilt wird.

3. Verfahren nach Anspruch 1 oder 2, bei dem die wenigstens zwei Phasen tierindividuell vorgegeben werden.

4. Verfahren nach Anspruch 1, bei dem die Änderung des Milchflusses oder einer zum Milchfluß proportionalen Größe während einer Phase, insbesondere der Hauptmelkphase, herangezogen wird.

5. Verfahren nach Anspruch 1, bei dem die zeitliche Änderung des Milchflusses oder einer zum Milchfluß proportionalen Größe wenigstens eines Melkvorgangs gespeichert und zur Bestimmung des Soll-Milchflusses eines darauffolgenden Melkvorgangs herangezogen wird.

6. Verfahren nach Anspruch 5, **dadurch gekennzeichnet, daß** die zeitliche Änderung des Milchflusses oder einer zum Milchfluß proportionalen Größe mehrerer Melkvorgänge gespeichert und der Soll-Milchfluß für einen darauffolgenden Melkvorgang durch Interpolation oder Extrapolation aus den gespeicherten Daten ermittelt wird.

7. Verfahren nach einem der Ansprüche 1 bis 6, bei dem das Aktivierungssignal in Abhängigkeit von einem Vergleich zwischen der während einer vorbestimmten Phase, insbesondere der Hauptmelkphase (HM), abgegebenen Ist-Milchmenge oder einer zur Milchmenge proportionaler Größe und einer vorgegebenen Soll-Milchmenge bestimmt wird.

8. Verfahren nach Anspruch 7, bei dem die Gesamt-Milchmenge wenigstens eines Melkvorgangs bestimmt wird und der Wert dieser Gesamt-Milchmenge als ein Ausgangswert zur Bestimmung der Soll-Milchmenge wenigstens eines darauffolgenden Melkvorgangs dient.

9. Verfahren nach einem der Ansprüche 1, 5 bis 8, bei dem der Soll-Milchfluß und/oder die Soll-Milchmenge unter Berücksichtigung eines Laktationsfaktors bestimmt wird.

## Claims

1. Method for determining at least one activation signal, wherein the at least one activation signal is determined during a milking operation of an animal, in particular a cow, the animal being identified with an identification, dependent on at least one parameter individual to the animal, wherein the milking operation is subdivided into at least two phases and the activation signal is utilized for initiating a subsequent milking phase and for each animal the subsequent milking phase is initiated individually to the animal, wherein as a parameter for determining the activation signal the modification of the milk flow during the milking operation or a data which is proportional to the milk flow is used and the activation signal being determined dependent on a comparison between a temporal modification of the milk flow during the milking operation, in particular during a phase, preferably during the primary milking phase, or a value being proportional to the milk flow (actual milk flow) and a desired milk flow.

2. Method according to claim 1, wherein the milking operation is subdivided into a principal milking phase (HM) and a subsequent milking phase (NM).

3. Method according to claim 1 or 2, wherein the at least two phases are predetermined individually to the animal.

4. Method according to claim 1, wherein the modification of the milk flow or of a value which is proportional to the milk flow during a phase, in particular the primary milking phase, is used.

5. Method according to claim 1, wherein the temporally modification of the milk flow or a value proportional to the milk flow of at least one milking operation is memorized and is used for the determination of the desired milk flow of a subsequent milking operation.

6. Method according to claim 5, **characterized in that** the temporally modification of the milk flow or of a value proportional to the milk flow of a plurality of milking operations is memorized and the desired milk flow for a subsequent milking operation is determined by interpolation or extrapolation from the data memorized.

7. Method according to one of claims 1 to 6, wherein the activation signal is determined dependent on a comparison between an actual milk quantity delivered during a predetermined phase, in particular the principal milking phase (HM) or a value proportional to the milk quantity and a predetermined desired milk quantity.

8. Method according to claim 7, wherein the total quantity of milk of a milking operation is determined and the value of this total quantity of milk serves as an initial value for determining the desired milk quantity of at least one following milking operation.

9. Method according to one of claims 1, 5 to 8, wherein the desired milk flow and/or the desired milk quantity is determined taking into account a lactation factor.

## Revendications

1. Procédé pour déterminer au moins un signal d'activation, dans quel cas l'au moins un signal d'activation est déterminé durant une opération de traite d'un animal, notamment d'une vache, identifié au moyen d'une identification d'animal, en fonction d'au moins un paramètre individuel selon l'animal, dans quel cas l'opération de traite est subdivisée en au moins deux phases et le signal d'activation est utilisé pour induire une phase de post-traite et la phase de post-traite est induite individuellement pour chaque animal, dans quel cas en tant qu'un paramètre pour déterminer le signal d'activation on se sert de la modification du flux de lait durant l'opération de traite ou d'une valeur proportionnelle au flux de lait et le signal d'activation est déterminé en fonction d'une comparaison entre une modification temporelle du flux de lait durant l'opération de traite, notamment durant une phase, de préférence durant la phase de traite principale, ou d'une valeur proportionnelle au flux de lait (flux de lait réel) et un flux de lait désiré.

2. Procédé selon la revendication 1, dans lequel l'opération de traite est subdivisée en une phase de traite principale (HM) et une phase de post-traite (NM).

3. Procédé selon la revendication 1 ou 2, dans lequel les au moins deux phases sont prédéterminées individuellement selon l'animal.

4. Procédé selon la revendication 1, dans lequel la modification du flux de lait ou d'une valeur proportionnelle au flux de lait est utilisée durant une phase, notamment durant la phase de traite principale.

5. Procédé selon la revendication 1, dans lequel la modification temporelle du flux de lait ou d'une valeur proportionnelle au flux de lait d'au moins une opération de traite est mémorisée et utilisée pour déterminer le flux de lait désiré d'une opération de traite suivante.

6. Procédé selon la revendication 5, **caractérisé en ce que** la modification temporelle du flux de lait ou d'une valeur proportionnelle au flux de lait d'une pluralité d'opérations de traite est mémorisée et pour une opération de traite suivante le flux de lait désiré est déterminé par interpolation ou extrapolation à partir des données mémorisées.

7. Procédé selon l'une des revendications 1 à 6, dans lequel le signal d'activation est déterminé en fonction d'une comparaison entre la quantité de lait réelle donnée durant une phase prédéterminée, notamment la phase de traite principale (HM) ou d'une valeur proportionnelle à la quantité de lait et une quantité de lait désirée prédéterminée.

8. Procédé selon la revendication 7, dans lequel la quantité totale de lait d'au moins une opération de traite est déterminée et la valeur de cette quantité totale de lait sert comme une valeur initiale pour déterminer la quantité de lait désirée d'au moins une opération de traite suivante.

9. Procédé selon une des revendications 1, 5 à 8, dans lequel le flux de lait désiré et/ou la quantité de lait désirée est déterminé en tenant compte d'un facteur de lactation.
